# FASCICULE DE BREVET EUROPEEN

(11) **EP 2 554 231 B1**
(45) Date de publication et mention de la délivrance du brevet: **05.12.2018**
(21) Numéro de dépôt: 12178819.4
(22) Date de dépôt: 01.08.2012
(51) Int. Cl.: B01D 33/073, B01D 33/80, B01D 33/50, E02B 8/02

(54) **Tamis à panneau filtrant cylindrique pour prise d'eau**
Sieb mit zylindrischem Filterpaneel für Wasserentnahmestelle
Screen with cylindrical filter panel for water intake

(30) Priorité: 02.08.2011 FR 1157082; 31.08.2011 US 201161529408 P
(43) Date de publication de la demande: 06.02.2013
(73) Titulaire: E. BEAUDREY & Cie., F-75018 Paris (FR)
(72) Inventeur: Carayon, Laurent, 92380 GARCHES (FR)
(74) Mandataire: Santarelli

(56) Documents cités:
- EP-A1- 0 160 590
- EP-A1- 0 525 753
- DE-C- 637 108
- DE-C- 734 268
- FR-A1- 2 475 091
- FR-A1- 2 477 195
- FR-A1- 2 874 334

## Description

La présente invention se rapporte aux dispositifs de filtration tels que notamment des tamis à panneau filtrant équipant les prises d'eau, qu'il s'agisse de prises d'eau en rivière ou de prises en mer, pour arrêter les débris et particules véhiculés par l'eau à prélever.

Généralement, un tamis pour prise d'eau est normalement disposé en aval d'une grille à barreaux écartés de plusieurs centimètres le protégeant des débris de grosses dimensions, soit isolément, soit en association avec un ou plusieurs autres tamis de même type appartenant à un même poste de tamisage.

De manière connue, l'élément filtrant, dont les mailles n'ont que quelques millimètres d'ouverture, est généralement mobile afin d'être périodiquement débarrassé des débris et particules qui, de dimensions supérieures à celles de ces mailles, viennent progressivement obstruer la totalité de celles-ci et donc le colmater.

Un tel élément filtrant mobile peut être constitué d'un panneau relevable dans son plan, en alternance avec un autre panneau de même type disposé parallèlement au précédent, à distance de ce dernier.

Un tel élément filtrant peut également être constitué d'une boucle sans fin, de section transversale allongée, pour la constitution d'une chaîne filtrante, appelée encore filtre à chaîne à passage direct ou à double flux.

Un tel élément filtrant peut aussi être constitué d'une boucle sans fin, de section transversale cylindrique ou polygonale pour la constitution d'un tambour filtrant.

Quoiqu'il en soit, un tel élément filtrant mobile pour prise d'eau, qu'il s'agisse d'un tamis à panneau filtrant, d'une chaîne filtrante ou d'un tambour filtrant, passe cycliquement d'une position d'immersion dans laquelle il se charge progressivement en débris et particules divers, à une position d'émersion. Dans cette dernière position, il est soumis aux effets de jets d'eau sous pression agissant à contre-courant pour le débarrasser des particules et débris ainsi appliqués à sa surface et le rendre ainsi apte à assumer à nouveau sa fonction de filtration au cours de son immersion ultérieure.

Les particules et débris ainsi entraînés par l'eau de lavage sont usuellement recueillis globalement, dans un chéneau aménagé à cet effet et sont évacués à l'égout par celui-ci.

Si des poissons sont présents sur les panneaux, ils sont alors exondés et soumis à des impacts qui les tuent le plus souvent.

De même, certaines fuites des panneaux entre eux, ou entre eux et les montants latéraux fixes de la charpente du filtre, peuvent se produire.

Par ailleurs, les poissons, piégés ou entraînés par l'élément filtrant mobile d'un tamis à une telle prise d'eau, sont irrémédiablement soumis :
- à un séjour, souvent prolongé, hors d'eau, au cours de la phase d'émersion de cet élément filtrant,
- à l'action des jets d'eau de lavage appliqués à celui-ci, qui est le plus souvent brutale et
- à la projection violente qui en résulte, dans le chéneau prévu pour la récupération d'ensemble des particules et débris ayant temporairement colmaté l'élément filtrant en question.

Les filtres à chaîne à passage direct, c'est-à-dire les filtres à chaîne dont seule la face amont du tablier filtrant reçoit l'eau à filtrer, présentent également divers inconvénients, qui sont les suivants :
Tout d'abord, au fond du pertuis, il est nécessaire de prévoir, à la base du tablier filtrant, pour étanchéité entre celui-ci et ledit fond, une plaque d'étanchéité, dite plaque de pied, qui doit être tangente audit tablier.

Or, compte tenu des inévitables tolérances de fabrication et de montage et de l'usure des pièces et, notamment de celle des chaînes porte tablier, un jeu minimal subsiste toujours entre une telle plaque de pied et le tablier filtrant et, en pratique, ce jeu n'est jamais inférieur à environ 6 mm, il dépasse même souvent cette valeur.

Il en résulte que, par mesure de cohérence, les tabliers filtrants de tels filtres à chaîne à passage direct ne peuvent pas être équipés de mailles d'ouverture inférieure à 6 mm et que l'efficacité de l'épuration assurée s'en trouve limitée en conséquence.

En ce qui concerne les filtres à chaîne à double flux, le tablier filtrant possède des génératrices parallèles au sens de circulation du flot d'eau à filtrer.

Les deux faces de ce tablier filtrant ont, en parallèle, des rôles identiques, soit que ledit flot circule de l'extérieur vers l'intérieur du tablier filtrant à travers l'une et l'autre des faces de celui-ci, soit qu'il circule en sens inverse.

La charpente porteuse de tels filtres à chaîne à double flux est usuellement adossée à des murets en maçonnerie établis l'un en regard de l'autre dans le pertuis à équiper.

De tels filtres à chaîne à double flux ont pour avantage, aucune étanchéité n'étant à prévoir au pied de leur tablier, de permettre la mise en oeuvre, pour celui-ci, de mailles d'ouverture réduite, inférieure par exemple à 0,5 mm, sans incohérence avec une quelconque autre lacune d'étanchéité.

Ils ont également pour avantage de permettre une utilisation simultanée des deux faces de leur tablier et donc de dédoubler, à volume égal, la surface effective de filtration, c'est-à-dire la capacité de l'appareil.

Néanmoins, des filtres à chaîne à double flux n'apportent aucune amélioration à la survie des poissons par rapport aux filtres à chaîne à passage direct.

Il a certes été déjà proposé divers dispositifs destinés à l'équipement d'un poste de tamisage pour prise d'eau en vue d'assurer la sauvegarde des éléments vivants et, en particulier, des poissons, véhiculés par l'eau à prélever. Cependant, dans les réalisations de ce type connues à ce jour, il s'agit soit de filtres spéciaux, n'assurant par eux-mêmes que la sauvegarde du poisson sans une quelconque fonction générale de tamisage, soit de filtres de tamisage conventionnels imposant aux poissons recueillis un séjour hors d'eau.

La présente invention a donc d'une manière générale pour objet de permettre d'assurer une filtration ou tamisage notamment pour prise d'eau en n'ayant pas les inconvénients des structures antérieures et, le cas échéant, également d'assurer la sauvegarde des poissons.

Par exemple, le document FR2475091 divulgue une prise d'eau comportant un dispositif de filtration sous la forme d'un tambour cylindrique, et comportant un chéneau de récupération des poissons.

Le document FR2477195 décrit une installation comprenant un canal et un dispositif de filtration sous la forme d'un filtre à chaîne à double flux pour filtrer l'eau s'écoulant dans le canal.

De plus, pour les installations équipées actuellement de filtres à chaîne à passage direct, il se pose de plus en plus le problème d'améliorer l'efficacité de l'épuration en réduisant les dimensions des débris ou organismes susceptibles d'être retenus.

Mais à ce jour, leur substitution par des appareils assurant au moins la même fonction, sans en offrir les inconvénients et sans modification des ouvrages de génie civil ni désordre hydraulique ne peut pas non plus se faire aisément, les conditions matérielles d'implémentation de ceux-ci étant différentes.

Le tamis à panneau filtrant objet du brevet français déposé sous le numéro 0406776 résout parfaitement ce problème. Il est cependant limité en capacité quand il est demandé de traiter un grand débit ou de tamiser de façon très fine. Dans les deux cas, la perte de charge du tamis augmente. Afin de résoudre ces difficultés, la présente invention permet d'augmenter la surface filtrante offerte au fluide tout en gardant les principes de fonctionnement du tamis objet du brevet précité.

Ainsi, la présente invention porte sur un dispositif de filtration ou tamis à élément filtrant à grande surface de filtration.

Selon un premier aspect, l'invention vise une installation comprenant un canal dans lequel s'écoule de l'eau et un dispositif de filtration d'un écoulement d'eau dans le canal, le niveau de l'eau dans le canal étant situé entre un plus bas niveau des eaux (PBE) et un plus haut niveau des eaux (PHE), le dispositif comprenant :
- un tambour à élément filtrant monté sur la paroi formant châssis au droit de l'ouverture traversante et qui comporte une surface filtrante faisant saillie par rapport à la paroi vers l'amont, la surface filtrante étant une surface de révolution dont l'axe de révolution est disposé perpendiculairement à ladite ouverture traversante et ayant des dimensions supérieures à celles d'une surface filtrante plane qui serait aménagée dans l'ouverture traversante, l'élément filtrant comportant des éléments de retenue aménagés en vis-à-vis de la surface filtrante en amont de celle-ci ou en aval selon le sens de circulation de l'eau afin de retenir les corps solides qui ne traversent pas la surface filtrante,
- au moins un dispositif d'aspiration qui est disposé en regard des éléments de retenue et en amont de ceux-ci,
- des moyens d'entrainement de l'élément filtrant et/ou dudit au moins un dispositif d'aspiration dans un mouvement relatif de l'un par rapport à l'autre de manière à ce que ledit au moins un dispositif d'aspiration soit successivement amené en vis-à-vis de chaque élément de retenue afin d'engendrer localement, à travers l'élément filtrant, une circulation d'eau à contre-courant successivement au droit de chaque élément de retenue,
dans lequel le dispositif de filtration comporte une paroi formant châssis (6) montée dans le canal et qui présente une ouverture traversante, et en ce que l'installation est configurée de sorte que le niveau supérieur du tambour est situé au maximum au niveau le plus bas des eaux (PBE).

Le dispositif de filtration peut ainsi être facilement installé dans un canal tel qu'un pertuis.

Un tel dispositif présente une surface de filtration bien plus grande que la surface filtrante circulaire du tamis de l'art antérieur susvisé, ce qui permet de traiter un grand débit d'eau.

La surface filtrante selon l'invention s'étend en effet à partir de la paroi formant châssis en formant une surface en trois dimensions (surface non plane) au lieu de la surface bidimensionnelle de l'art antérieur.

Selon une caractéristique possible, la surface filtrante est cylindrique, ce qui accroît de façon particulièrement simple et considérable la taille de la surface filtrante de l'art antérieur. La hauteur de la surface cylindrique qui correspond à la dimension d'extension de celle-ci à partir de la paroi formant
châssis ou le diamètre de la surface cylindrique peut être ajusté en fonction de la capacité de filtrage/tamisage que l'on souhaite conférer au dispositif.

Si la hauteur de la surface cylindrique devient trop importante relativement au diamètre du cylindre, des efforts de flexion sont ainsi créés au pied de l'axe fixé à la paroi. Dans ces circonstances un support de l'extrémité libre de la surface peut être nécessaire afin d'éviter des déformations de celle-ci sous l'effet de son poids.

Selon une caractéristique possible, l'axe de révolution de la surface filtrante cylindrique est disposé perpendiculairement à l'ouverture traversante de la paroi formant châssis.

Cette configuration est particulièrement simple. La surface filtrante cylindrique est positionnée devant l'ouverture de la paroi et est ouverte à son extrémité qui fait face à l'ouverture afin que l'eau puisse traverser l'élément filtrant, pénétrer à l'intérieur du cylindre filtrant et s'échapper par l'ouverture vers l'aval de la paroi.

Une circulation inverse de l'eau est également envisageable. On notera que dans ce cas les éléments de retenue sont disposés à l'intérieur de la surface filtrante cylindrique et non à l'extérieur.

Dans la configuration présentée ci-dessus l'extrémité libre de la surface filtrante est fermée afin de forcer l'écoulement d'eau à travers la surface filtrante cylindrique.

Selon une caractéristique possible, les éléments de retenue sont disposés parallèlement entre eux suivant des génératrices de la surface filtrante cylindrique.

Ces éléments forment ainsi des compartiments longitudinaux à la périphérie extérieure de la surface filtrante cylindrique.

Cet agencement de compartiments est particulièrement simple à réaliser et efficace.

Selon une caractéristique possible, les éléments de retenue précités sont formés par deux cloisons espacées parallèles entre elles, agencées suivant des génératrices de la surface filtrante cylindrique.

Ces cloisons longitudinales sont généralement régulièrement réparties autour de la surface filtrante.

Selon une autre forme de réalisation possible, la surface filtrante est conique et non cylindrique comme décrit ci-dessus.

Dans cette autre configuration, la base du cône est en contact avec la paroi formant châssis et la surface filtrante conique s'étend en éloignement de la paroi, sensiblement perpendiculairement à cette dernière en direction de la pointe du cône.

On notera que la surface filtrante peut de façon alternative être tronconique.

Les éléments de retenue agencés sur la périphérie de la surface filtrante conique sont alors disposés suivant des génératrices du cône et forment ainsi, suivant une vue en plan, des compartiments de forme générale triangulaire dont la pointe du triangle est dirigée vers la pointe du cône.

Là aussi, l'augmentation de surface filtrante résultant d'une telle forme permet de traiter/tamiser un plus grand débit d'eau que la surface filtrante circulaire du tamis de l'art antérieur visé ci-dessus.

On notera que dans le cas où une surface filtrante conique ou tronconique est utilisée avec une circulation d'eau inversée, c'est-à-dire que l'eau traverse d'abord l'ouverture dans la paroi formant châssis, puis pénètre à l'intérieur de la surface filtrante et traverse cette dernière pour ressortir en aval de celle-ci de l'autre côté du dispositif de filtration, les éléments de retenue sont disposés à l'intérieur de la surface conique et non à l'extérieur.

Selon une autre caractéristique possible, l'élément filtrant est mobile tandis que ledit au moins un dispositif d'aspiration est fixe.

Selon une autre caractéristique alternative possible, l'élément filtrant est fixe tandis que ledit au moins un dispositif d'aspiration est mobile.

Selon encore une autre caractéristique alternative possible, l'élément filtrant et ledit au moins un dispositif d'aspiration sont mobiles.

On notera que, quelle que soit la forme de réalisation présentée ci-dessus, un mouvement relatif doit s'établir entre l'élément filtrant (quelle que soit la forme de la surface filtrante) et le ou les dispositifs d'aspiration afin que ce ou ces derniers soient successivement amenés en vis-à-vis de chaque élément de retenue pour aspirer les divers corps solides arrêtés par la surface filtrante.

Selon une caractéristique possible, les moyens d'entrainement sont adaptés pour entrainer en rotation l'élément filtrant, le ou les dispositifs d'aspiration ou les deux.

On notera que dans la forme de réalisation où l'élément filtrant et le ou les dispositifs d'aspiration sont mobiles, des moyens d'entrainement distincts sont prévus pour entrainer en mouvement chacun de ceux-ci.

Le mouvement de rotation du ou des éléments précités est un mouvement particulièrement simple à effectuer.

Selon une autre caractéristique possible, le dispositif d'aspiration ou chaque dispositif d'aspiration s'il y en a plusieurs, comprend un organe d'aspiration (par exemple: pompe, éjecteur, écoulement gravitaire...) et une trompe d'aspiration, un organe d'aspiration (par exemple : pompe) pouvant être commun à plusieurs trompes.

La trompe d'aspiration est destinée à être positionnée en regard des éléments de retenue et à balayer successivement chacun d'eux lors du mouvement relatif entre le dispositif d'aspiration et l'élément filtrant.

Selon une autre caractéristique possible, la trompe d'aspiration a une forme générale allongée et comprend une paroi formant enveloppe qui présente, en section transversale, un profil ouvert doté d'une ouverture en vis-à-vis des éléments de retenue. Par exemple, l'ouverture est pratiquée dans une lèvre cintrée parallèle et tangente à la surface filtrante, solidaire de l'organe d'aspiration. Cette lèvre cintrée empêche que l'eau aspirée soit de l'eau non filtrée qui a contourné l'organe d'aspiration et non de l'eau provenant de l'intérieur du

Une telle forme est par exemple obtenue à partir d'une plaque de forme sensiblement rectangulaire qui serait cintrée autour d'un cylindre afin d'amener les deux bords longitudinaux de la plaque (grands côtés) en regard l'un de l'autre mais à distance, pour ménager une ouverture entre ces derniers.

Il convient d'ailleurs de noter qu'une autre méthode pour former une telle trompe d'aspiration peut consister à réaliser une fente dans un tube cylindrique creux, sur toute la hauteur de ce dernier, puis à écarter légèrement les bords libres encadrant la fente axiale ainsi formée de manière à agrandir celle-ci et à obtenir la forme souhaitée.

Selon une caractéristique possible, le profil ouvert a une forme générale de U ou de C.

Un tel profil est particulièrement adapté à coopérer avec les éléments de retenue de l'élément filtrant.

Selon une caractéristique possible, l'ouverture présente, en plan, un contour sensiblement rectangulaire de dimensions égales ou supérieures à celles des éléments de retenue en regard.

Une telle ouverture est particulièrement bien adaptée à la configuration des éléments de retenue de l'élément filtrant doté d'une surface de filtration cylindrique.

Le dispositif de filtration peut ainsi être facilement installé dans un canal tel qu'un pertuis.

Des caractéristiques et avantages mentionnés ci-dessus à propos du dispositif de filtration s'appliquent également à l'installation visée ci-dessus.

Selon une configuration possible plus particulière du dispositif de l'invention, le dispositif/tamis comprend un châssis propre à se raccorder à une prise d'eau et un panneau filtrant cylindrique interposé axialement dans une ouverture cylindrique dudit châssis, en étant solidaire dudit châssis, ledit panneau cylindrique filtrant comportant un cylindre à axe horizontal et comportant des éléments de retenue longitudinaux qui sont disposés, en amont du panneau filtrant cylindrique et solidaires de celui-ci. Un dispositif d'aspiration, est disposé en amont des éléments de retenue et des moyens d'entraînement du panneau cylindrique et/ou du dispositif d'aspiration selon un mouvement rotatif relatif sont prévus de manière à engendrer localement, à travers le panneau filtrant cylindrique, une circulation à contre-courant successivement au droit de chaque élément de retenue, selon ledit mouvement rotatif relatif, pour reprendre successivement les débris et particules retenus par ceux-ci et les diriger à travers une conduite d'évacuation apte à évacuer lesdits débris et particules ainsi prélevés vers l'extérieur.

Selon une première réalisation possible, le panneau filtrant cylindrique est fixe tandis que les moyens d'entraînement sont adaptés pour entraîner le dispositif d'aspiration cylindrique en rotation.

Selon une seconde réalisation possible, le dispositif d'aspiration est fixe tandis que les moyens d'entraînement sont adaptés pour entraîner le panneau filtrant cylindrique en rotation.

Selon une troisième réalisation possible, les moyens d'entraînement sont adaptés pour entraîner en rotation le dispositif d'aspiration et le panneau filtrant cylindrique.

En pratique, le dispositif d'aspiration comprend une pompe d'aspiration et une trompe d'aspiration.

De préférence, le volume externe du panneau filtrant cylindrique est fragmenté circulairement en compartiments par des cloisons longitudinales formant les éléments de retenue et la trompe d'aspiration comporte, en plan, un contour rectangulaire équivalent ou sensiblement supérieur à une fois celui d'un tel compartiment.

En variante, le dispositif d'aspiration comprend deux trompes disposées respectivement de part et d'autre du panneau filtrant cylindrique, l'une en aval dans le sens du flux sortant, l'autre en amont, établies en correspondance l'une avec l'autre et tournées l'une et l'autre vers le panneau filtrant cylindrique en coopération avec le mouvement rotatif relatif et une pompe dont le refoulement est raccordé à la trompe disposée en aval du panneau filtrant cylindrique.

Dans une configuration sans poisson à sauvegarder, la conduite d'évacuation peut comprendre, en outre, au moins un concentrateur de débris.

Selon une réalisation, la conduite d'évacuation comprend deux concentrateurs à débris et un jeu de vannes permettant un service alternatif sur l'un ou l'autre des concentrateurs.

Dans une configuration avec poissons à sauvegarder, la conduite d'évacuation est dépourvue de concentrateur et l'eau, chargée de débris et de poissons, est déversée directement dans une conduite ou un canal pour un retour au milieu naturel.

En pratique, la position basse du cylindre filtrant circulaire correspond sensiblement au fond d'un pertuis ainsi équipé, tandis que la position haute du panneau filtrant cylindrique est, si possible, à un niveau inférieur à celui des basses eaux.

Selon un autre aspect de l'invention, le tamis comprend au moins deux panneaux filtrants cylindriques superposés l'un sur l'autre dans le plan vertical, entre la position basse et la position haute, chaque dispositif d'aspiration étant relié à une évacuation commune ou séparée et l'entraînement des panneaux filtrants cylindriques étant réalisé par des moyens d'entraînement séparés ou communs aux deux panneaux filtrants cylindriques.

Selon encore une autre réalisation, le tamis est destiné à être logé en lieu et place d'un filtre à chaîne à passage direct formé d'un canal constitué d'un fond et de deux murs latéraux rectilignes où sont scellés des guides verticaux, dans lesquels la charpente du filtre à passage direct est susceptible de glisser et une ouverture rectangulaire au plancher de service bordé généralement sur son côté amont par un caniveau destiné au recueil des détritus projetés par les jets de lavage et un fond d'ouvrage plat, ledit tamis selon l'invention étant apte à coopérer avec l'ouvrage de génie civil dudit filtre à passage direct.

D'autres caractéristiques et avantages de l'invention apparaîtront à la lumière de la description détaillée ci-après et des dessins dans lesquels :
- la **Figure 1** est une vue en coupe transversale d'un pertuis de prise d'eau équipé d'un dispositif/tamis à panneau filtrant cylindrique selon l'invention, vue de l'amont ;
- la **Figure 2** est une vue en élévation-coupe en section horizontale selon la coupe BB de la **Figure 1** ;
- la **Figure 3** est une vue en coupe horizontale suivant la section CC de la **Figure 1** ; et
- la **Figure 4** reprend à plus grande échelle les détails D et E des Figures 1 et 2.

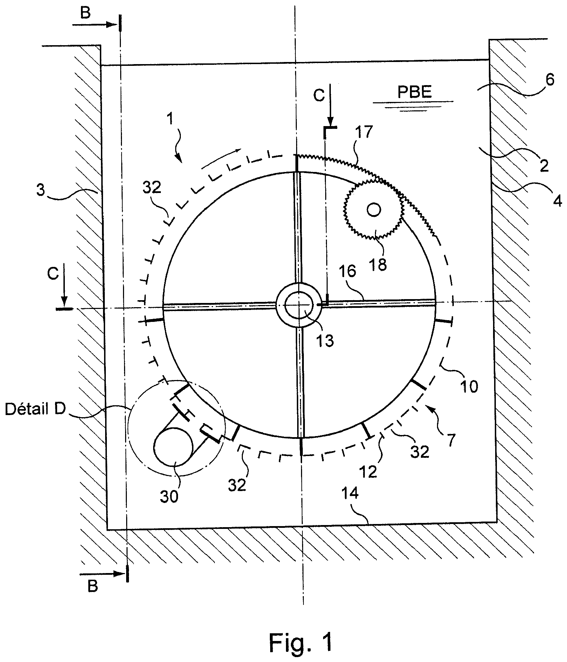

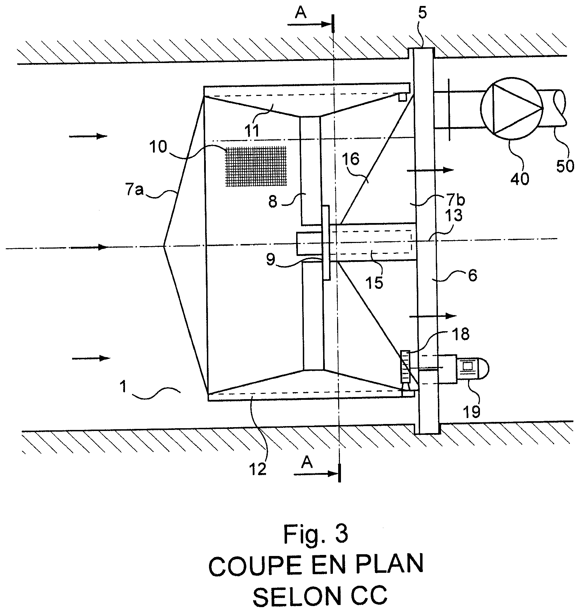

Tel qu'illustré sur les Figures, un dispositif de filtration à élément filtrant ayant une surface de filtration cylindrique tel qu'un tamis 1 à panneau filtrant cylindrique est installé dans un canal ou pertuis 2 de prise d'eau dont les parois 3 et 4 de maçonnerie parallèles comportent chacune, en regard l'une de l'autre, un guide vertical 5 (**Figure 3****)**. Une installation comprenant le canal et le dispositif de filtration est représentée sur les **Figures 1** à **3**.

De tels guides 5 sont par exemple réalisés en métal et forment chacun une rainure ainsi que représenté à la **Figure 3**.

Le pertuis 2 est équipé d'une plaque porteuse ou paroi formant châssis 6 s'étendant d'un mur 3 à l'autre 4 et qui est glissée verticalement dans les guides 5. La plaque 6 comporte une ouverture circulaire centrée sensiblement sur l'axe 13 de la plaque 6. La partie basse de l'ouverture circulaire est située le plus généralement très près du fond 14 du pertuis 2. L'ouverture circulaire est obstruée par un cylindre 7 concentrique à l'ouverture et qui fait saillie par rapport à la plaque porteuse ou châssis 6 vers l'amont **(****Figure 3****)**. Le cylindre 7 est constitué de plusieurs rayons 8, d'un moyeu 9, d'un élément filtrant 10 fixé à la périphérie du cylindre 7. Les rayons 8 s'étendent du moyeu 9 aux traverses 11 et sont généralement répartis de façon régulière autour du moyeu. Ces rayons 8 sont solidaires de l'élément filtrant 10. Des cloisons longitudinales 12 espacées les unes des autres délimitent deux à deux des compartiments ou éléments de retenue des corps solides (détritus et particules) divers arrêtés par la surface de filtration cylindrique de l'élément filtrant 10. Par exemple, la largeur des cloisons 12 est de plusieurs centimètres d'amont en aval. Les cloisons 12 sont disposées à la périphérie du cylindre 7 et s'étendent radialement vers l'extérieur de l'élément filtrant 10, en éloignement de celui-ci. Les cloisons 12 sont agencées longitudinalement suivant des génératrices du cylindre 7, sur toute la hauteur de celui-ci.

Le diamètre du cylindre 7 est de préférence le plus grand possible, c'est-à-dire légèrement inférieur à la largeur du pertuis 2, ceci afin d'augmenter le plus possible la surface de filtration. La hauteur du cylindre peut aussi être ajustée et augmentée si besoin est. Toutefois, pour éviter un fléchissement d'un cylindre trop haut sous l'action de son poids qui, normalement, nécessiterait de supporter l'extrémité libre du cylindre, on peut préférer augmenter le diamètre du cylindre.

On notera que l'eau s'écoule comme indiqué par les flèches sur la Figure 3 de l'extérieur vers l'intérieur du cylindre filtrant avant de s'échapper vers l'aval par l'ouverture centrale dans la plaque 6.

En variante, l'eau s'écoule de l'intérieur du cylindre filtrant vers l'extérieur et les éléments de retenue sont disposés à l'intérieur du cylindre filtrant.

Le niveau le plus bas des eaux noté PBE est généralement situé au moins au niveau supérieur du cylindre (Figure1). En variante, le niveau PBE peut être plus haut ou plus bas en fonction de contraintes annexes.

Le moyeu 9 du cylindre est muni de paliers et de butées mécaniques connus par eux-mêmes. Le moyeu 9 est porté par un arbre 15 fixé à la plaque ou paroi support 6 par des bras radiaux 16.

Afin d'empêcher l'eau de passer de l'amont vers l'aval du cylindre filtrant 7 sans passer par l'élément filtrant 10, la plaque 6 s'étend au moins jusqu'à un niveau généralement égal ou supérieur au niveau des plus hautes eaux PHE non représenté sur les figures.

Comme représenté sur la Figure 3, le cylindre 7 est obturé à son extrémité amont 7a qui est opposée à l'extrémité aval 7b située en vis-à-vis de l'ouverture centrale de la plaque 6. La paroi d'obturation 7a a par exemple une forme conique dans cet exemple pour des raisons hydrauliques.

Le cylindre 7, centré par le moyeu 9, est entraîné en rotation par des moyens d'entraînement comportant une denture d'engrenage périphérique 17, un pignon 18 et un moteur d'entraînement 19 (Figures 1, 3 et 4, détail E).

On notera qu'un joint d'étanchéité à lèvre 20 est par exemple prévu entre l'extrémité 7b du cylindre filtrant et la paroi ou plaque 6.

En variante, l'élément filtrant 10 protubérant par rapport à la plaque ou paroi 6 est conique avec la base du cône située en regard de l'ouverture de la plaque ou paroi 6 et la pointe du cône dirigée vers l'amont.

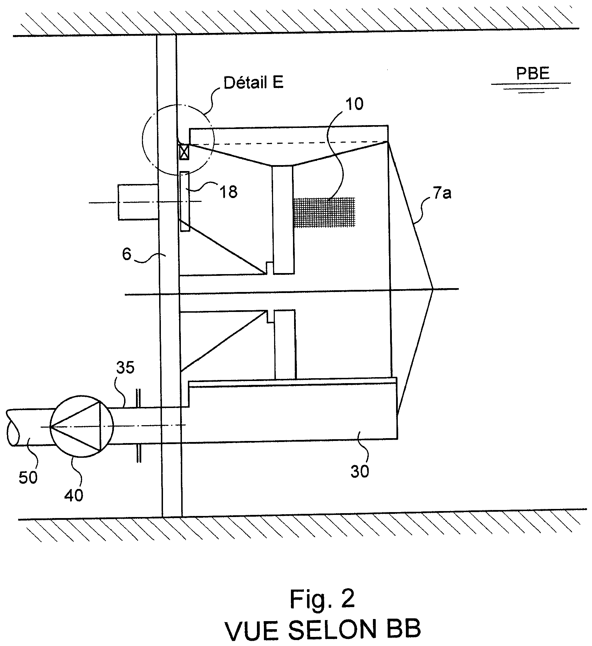

Il est adjoint au cylindre filtrant un dispositif d'aspiration comprenant une trompe longitudinale tangentielle 30 (Figures 1, 2 et 4) s'étendant tout le long d'une génératrice du cylindre 7. La trompe 30 est fixée à la plaque porteuse 6 par une extrémité (Figure 2). La trompe 30 comporte une surface cylindrique ouverte sur toute sa hauteur par une fente ou ouverture 31 qui est agencée axialement, c'est-à-dire suivant les génératrices de ladite surface cylindrique et qui fait face au cylindre 7. Les bords de la fente sont ensuite écartés l'un de l'autre afin d'agrandir cette dernière.

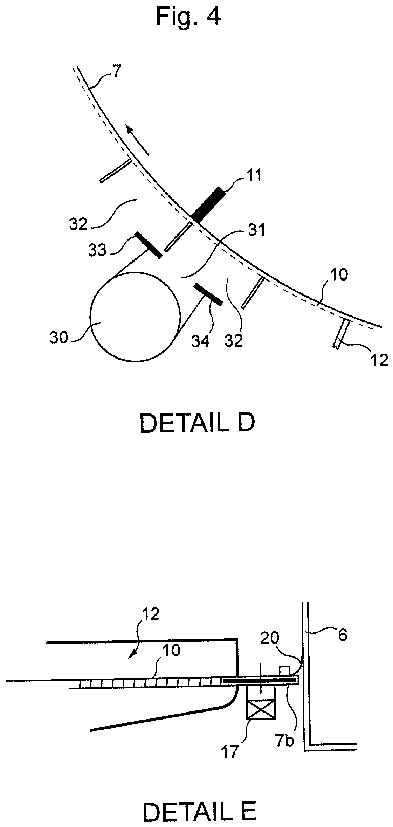

Comme représenté sur la Figure 1 et la Figure 4 (détail D) la section transversale de la trompe ainsi conformée a un profil ouvert en forme de U dont l'ouverture est orientée vers des éléments de retenue de l'élément filtrant 10.

En pratique, le volume externe du cylindre 7 équipé de l'élément filtrant 10 est fragmenté circulairement en compartiments 32 par les cloisons longitudinales parallèles 12 formant les éléments de retenue. La trompe 30 a, en plan, suivant une vue prise depuis le cylindre 7, un contour rectangulaire équivalent ou sensiblement supérieur à une fois celui d'un tel compartiment.

La trompe 30 a une ouverture 31 orientée en vis-à-vis des compartiments 32 du cylindre, qui peut être équipée de lèvres souples 33, 34 afin d'en réduire la section, tout en permettant le passage occasionnel de corps de plus grandes dimensions. La trompe 30 est reliée par une conduite 35 à un organe d'aspiration tel qu'une pompe 40 fixée à la paroi 6, par exemple du côté aval de celle-ci. La conduite 35 traverse ainsi par exemple la paroi 6 et assure la fixation de la trompe 30 à cette dernière.

La pompe 40, alimentée par exemple par un câble (non représenté), est choisie de manière à pouvoir pomper de gros débris et, lorsque nécessaire, d'un type également apte à assurer un très fort taux de survie des poissons. L'eau véhiculant débris, poissons et autres formes de vie aquatique est évacuée vers son point de collecte par une conduite 50.

En variante, le dispositif d'aspiration comprend deux trompes disposées respectivement de part et d'autre du panneau ou élément filtrant cylindrique, l'une en aval dans le sens du flux sortant, l'autre en amont. Ces deux trompes sont agencées en correspondance l'une avec l'autre et tournées l'une et l'autre vers le panneau filtrant cylindrique en coopération avec le mouvement rotatif relatif et une pompe dont le refoulement est raccordé à la trompe est disposée en aval du panneau filtrant cylindrique.

Selon une autre variante, la conduite d'évacuation 50 comprend deux concentrateurs à débris (non représentés) et un jeu de vannes permettant un service alternatif sur l'un ou l'autre des concentrateurs.

Dans une configuration avec poissons à sauvegarder, la conduite d'évacuation est dépourvue de concentrateur et l'eau chargée de débris et de poissons est déversée directement dans une conduite ou un canal pour un retour au milieu naturel.

Sur les **Figures 1** à **3**, on a représenté une forme de réalisation dans laquelle le dispositif d'aspiration 30, 40 est fixe, tandis que les moyens d'entraînement 17, 18, 19 sont adaptés pour entraîner le panneau ou élément filtrant cylindrique en rotation.

En variante (non représentée), le panneau ou élément filtrant est fixe tandis que les moyens d'entraînement sont adaptés pour entraîner le dispositif d'aspiration en rotation.

Selon une autre variante (non représentée), les moyens d'entraînement sont adaptés/configurés pour entraîner en rotation à la fois le ou les dispositifs d'aspiration (s'il y en a plusieurs) et le panneau filtrant cylindrique.

Ce qui vient d'être décrit concernant notamment les compartiments, le ou les dispositifs d'aspiration, le mouvement relatif entre ce(s) dernier(s) et l'élément filtrant s'applique quelle que soit la forme de l'élément filtrant.

Toutefois, pour un élément filtrant de forme non cylindrique les compartiments ou éléments de retenue ont des formes différentes adaptées (par exemple, une forme générale triangulaire pour un cône), de même que le dispositif d'aspiration.

Le fonctionnement du tamis est le suivant : à l'arrêt, le cylindre filtrant 7 est arrêté, la pompe 40 ne fonctionne pas et l'eau circule à travers l'élément filtrant. Les débris sont arrêtés par l'élément filtrant 10 et retenus dans les compartiments longitudinaux 32 en périphérie du cylindre. Lorsque l'on veut nettoyer le filtre 7, la pompe 40 est mise en route et le cylindre est mis en rotation par les moyens d'entraînement 17, 18, 19. Le cylindre tourne et les compartiments périphériques 32 passent tour à tour devant l'ouverture 31 de la trompe 30. Chaque compartiment est isolé du flot général par la façade de la trompe. L'aspiration de la pompe crée dans le compartiment une circulation en sens inverse de celui du tamisage normal et avec une vitesse du même ordre. Les débris sont aspirés dans la trompe 30, à travers la pompe 40, et sont évacués par la conduite 50.

Si un débris de grandes dimensions situé dans un compartiment 32 bloque la rotation du cylindre, le système d'entraînement 17, 18, 19 s'arrête par l'effet d'un limiteur d'effort connu en soi et une rotation en sens inverse est enclenchée, permettant généralement de se débarrasser du débris bloquant.

La pompe de lavage 40 et le mouvement de rotation sont arrêtés en fin de cycle de lavage.

Lorsqu'il s'agit de récupérer vivants les poissons et autres formes de vie aquatique arrêtés sur le cylindre filtrant, la pompe utilisée est d'un type adapté et connu en soi. Le fonctionnement est normalement automatique et asservi à la perte de charge engendrée par le cylindre filtrant, c'est-à-dire à son encrassement. Des dispositifs déjà connus par eux-mêmes assurent la sécurité de l'installation.

La taille des débris à aspirer est limitée par la grille à barreaux d'entrée présente dans de tels ouvrages de prise d'eau. Ces débris peuvent alors être stockés en attente de lavage grâce à la dimension des compartiments, notamment à la distance entre la surface de l'élément filtrant et l'extrémité libre des cloisons longitudinales desdits compartiments.

Il est à noter que le dispositif de filtration ou tamis selon l'invention empêche toute possibilité de contournement du système.

Il n'engendre pas non plus de turbulences significatives dans le flot sortant. Il est donc plus efficace qu'un filtre à chaîne à double flux.

Un tel dispositif/tamis selon l'invention a l'avantage de pouvoir être introduit par glissement dans des guides verticaux coopérant avec des structures porteuses de filtres à chaîne à passage direct.

L'élément filtrant 10 peut présenter des ouvertures de mailles de forme cylindrique, rectangulaire, carrée ou de fentes avec des dimensions respectives de l'ordre de 10 x 10 à 0,5 x 0,5 mm.

Le dispositif/tamis selon l'invention trouve également une application aux pertuis présentant une inclinaison par rapport au plan vertical.

Il peut même être monté avec l'axe vertical et une sortie en tunnel sous le plancher.

## Revendications

1. Installation comprenant un canal dans lequel s'écoule de l'eau et un dispositif de filtration de l'écoulement d'eau dans le canal (2), le niveau de l'eau dans le canal étant situé entre un plus bas niveau des eaux (PBE) et un plus haut niveau des eaux (PHE), le dispositif comprenant :
- une paroi formant châssis (6) montée dans le canal et qui présente une ouverture traversante,
- un tambour à un élément filtrant (10) monté sur la paroi formant châssis au droit de l'ouverture traversante et qui comporte une surface filtrante faisant saillie par rapport à la paroi vers l'amont, la surface filtrante étant une surface de révolution dont l'axe de révolution est disposé perpendiculairement à ladite ouverture traversante et ayant des dimensions supérieures à celles d'une surface filtrante plane qui serait aménagée dans l'ouverture traversante, l'élément filtrant comportant des éléments de retenue (32) aménagés en vis-à-vis de la surface filtrante en amont de celle-ci, afin de retenir les corps solides qui ne traversent pas la surface filtrante,
- au moins un dispositif d'aspiration (30, 40) qui est disposé en regard des éléments de retenue et en amont de ceux-ci,
- des moyens d'entrainement (17, 18, 19) de l'élément filtrant et/ou dudit au moins un dispositif d'aspiration dans un mouvement relatif de l'un par rapport à l'autre de manière à ce que ledit au moins un dispositif d'aspiration soit successivement amené en vis-à-vis de chaque élément de retenue afin d'engendrer localement, à travers l'élément filtrant, une circulation d'eau à contre-courant successivement au droit de chaque élément de retenue, l'installation étant configurée de sorte que le niveau supérieur du tambour est situé au maximum au niveau le plus bas des eaux (PBE).

2. Installation selon la revendication 1, **caractérisée en ce que** la surface filtrante est cylindrique.

3. Installation selon la revendication 2, **caractérisée en ce que** les éléments de retenue sont disposés parallèlement entre eux suivant des génératrices de la surface filtrante cylindrique.

4. Installation selon la revendication 3, **caractérisée en ce que** les éléments de retenue sont formés par deux cloisons (12) espacées parallèles entre elles, agencées suivant des génératrices de la surface filtrante cylindrique.

5. Installation selon la revendication 1, **caractérisée en ce que** la surface filtrante est conique.

6. Dispositif selon l'une des revendications 1 à 5, **caractérisé en ce que** l'élément filtrant est mobile tandis que ledit au moins un dispositif d'aspiration est fixe.

7. Installation selon l'une des revendications 1 à 5, **caractérisée en ce que** l'élément filtrant est fixe tandis que ledit au moins un dispositif d'aspiration est mobile.

8. Installation selon l'une des revendications 1 à 5, **caractérisée en ce que** l'élément filtrant et ledit au moins un dispositif d'aspiration sont mobiles.

9. Installation selon l'une des revendications 6 à 8, **caractérisée en ce que** les moyens d'entrainement (17, 18, 19) sont adaptés pour entrainer en rotation l'élément filtrant, ledit au moins un dispositif d'aspiration ou les deux.

10. Installation selon l'une des revendications 1 à 9, **caractérisée en ce que** le dispositif d'aspiration ou chaque dispositif d'aspiration s'il y en a plusieurs, comprend un organe d'aspiration (40) et une trompe d'aspiration (30), un organe d'aspiration pouvant être commun à plusieurs trompes.

11. Installation selon les revendications 2 et 10, **caractérisée en ce que** la trompe d'aspiration (30), a une forme générale allongée et comprend une paroi formant enveloppe qui présente, en section transversale, un profil ouvert doté d'une ouverture (31) en vis-à-vis des éléments de retenue.

12. Installation selon la revendication 11, **caractérisée en ce que** le profil ouvert a une forme générale de U ou de C.

13. Installation selon la revendication 11 ou 12, **caractérisée en ce que** l'ouverture (31) présente, en plan, un contour sensiblement rectangulaire de dimensions égales ou supérieures à celles des éléments de retenue en regard.

## Patentansprüche

1. Anlage, umfassend eine Leitung, in der Wasser fließt, und eine Filtervorrichtung zum Filtern des Wasserflusses in der Leitung (2), wobei der Wasserpegel in der Leitung zwischen einem niedrigsten Wasserpegel (PBE) und einem höchsten Wasserpegel (PHE) liegt, wobei die Vorrichtung umfasst:
- eine Rahmenwand (6), die in der Leitung angebracht ist und eine Durchgangsöffnung aufweist,
- eine Trommel mit einem Filterelement (10), die an der Rahmenwand im Bereich der Durchgangsöffnung angebracht ist und eine Filterfläche aufweist, die bezüglich der Wand stromaufwärts vorspringt, wobei die Filterfläche eine Umlauffläche ist, deren Drehachse senkrecht zur Durchgangsöffnung angeordnet ist und die größere Abmessungen als eine flache Filterfläche hat, die in der Durchgangsöffnung ausgebildet sein soll, wobei das Filterelement Rückhalteelemente (32) umfasst, die der Filterfläche gegenüberliegend stromaufwärts derselben ausgebildet sind, um Festkörper zurückzuhalten, die nicht durch die Filterfläche treten,
- zumindest eine Saugvorrichtung (30, 40), die den Rückhalteelementen gegenüberliegend und stromaufwärts derselben angeordnet ist,
- Antriebseinrichtungen (17, 18, 19) zum Antreiben des Filterelements und/oder der zumindest einen Saugvorrichtung zu einer relativen Bewegung zueinander, derart, dass die zumindest eine Saugvorrichtung nacheinander jedem Rückhalteelement gegenüberzuliegen kommt, um durch das Filterelement hindurch bereichsweise eine gegenläufige Wasserströmung im Bereich eines jeden Rückhalteelements zu bewirken,
wobei die Anlage so ausgelegt ist, dass das obere Niveau der Trommel höchstens auf dem niedrigsten Wasserpegel (PBE) liegt.

2. Anlage nach Anspruch 1, **dadurch gekennzeichnet, dass** die Filterfläche zylindrisch ist.

3. Anlage nach Anspruch 2, **dadurch gekennzeichnet, dass** die Rückhalteelemente entlang von Mantellinien der zylindrischen Filterfläche parallel zueinander angeordnet sind.

4. Anlage nach Anspruch 3, **dadurch gekennzeichnet, dass** die Rückhalteelemente aus zwei parallel zueinander verlaufenden, beabstandeten Trennwänden (12) gebildet sind, die entlang von Mantellinien der zylindrischen Filterfläche angeordnet sind.

5. Anlage nach Anspruch 1, **dadurch gekennzeichnet, dass** die Filterfläche konisch verläuft.

6. Anlage nach einem der Ansprüche 1 bis 5, **dadurch gekennzeichnet, dass** das Filterelement beweglich ist, während die zumindest eine Saugvorrichtung feststehend ist.

7. Anlage nach einem der Ansprüche 1 bis 5, **dadurch gekennzeichnet, dass** das Filterelement feststehend ist, während die zumindest eine Saugvorrichtung beweglich ist.

8. Anlage nach einem der Ansprüche 1 bis 5, **dadurch gekennzeichnet, dass** das Filterelement und die zumindest eine Saugvorrichtung beweglich sind.

9. Anlage nach einem der Ansprüche 6 bis 8, **dadurch gekennzeichnet, dass** die Antriebseinrichtungen (17, 18, 19) dazu ausgelegt sind, das Filterelement, die zumindest eine Saugvorrichtung oder beide drehend anzutreiben.

10. Anlage nach einem der Ansprüche 1 bis 9, **dadurch gekennzeichnet, dass** die Saugvorrichtung bzw. jede Saugvorrichtung - falls mehrere vorhanden sind - ein Saugorgan (40) und einen Saugrüssel (30) enthält, wobei ein Saugorgan mehreren Saugrüsseln gemein sein kann.

11. Anlage nach den Ansprüchen 2 und 10, **dadurch gekennzeichnet, dass** der Saugrüssel (30) eine längliche Form hat und eine Mantelwand enthält, die im Querschnitt ein offenes Profil mit einer den Rückhalteelementen gegenüberliegenden Öffnung (31) aufweist.

12. Anlage nach Anspruch 11, **dadurch gekennzeichnet, dass** das offene Profil eine U- oder C-Form hat.

13. Anlage nach Anspruch 11 oder 12, **dadurch gekennzeichnet, dass** die Öffnung (31) im Grundriss eine im Wesentlichen rechteckförmige Kontur hat, deren Abmessungen gleich oder größer als die der gegenüberliegenden Rückhalteelemente sind.

## Claims

1. An installation comprising a channel in which water flows and a device for filtering the stream of water in the channel (2), the water level in the channel being situated between a lowest water level (PBE) and a highest water level (PHE), the device comprising:
- a frame-forming wall (6) mounted in the channel and which comprises a through-opening,
- a drum with a filter member (10) mounted on the frame-forming wall opposite the through-opening and which comprises a filter surface projecting relative to the wall in the upstream direction, the filter surface being a surface of revolution of which the axis of revolution is disposed perpendicularly to said through-opening and having a larger area than would have a flat filter surface fitted in the through-opening, the filter member comprising retaining members (32) provided face to face with the filter surface upstream thereof, in order to retain the solid bodies that do not pass through the filter surface,
- at least one suction device (30, 40) which is disposed opposite the retaining members upstream thereof,
- means (17, 18, 19) for driving the filter member and/or said at least one suction device in a relative movement between them such that said at least one suction device is successively brought face to face with each retaining member in order to locally generate, through the filter member, a counter-flow of water successively opposite each retaining member,
the installation being configured such that the upper level of the drum is situated at a maximum at the lowest level of the water (PBE)

2. An installation according to claim 1, **characterized in that** the filter surface is cylindrical.

3. An installation according to claim 2, **characterized in that** the retaining members are disposed parallel to each other along generatrices of the cylindrical filter surface.

4. An installation according to claim 3, **characterized in that** the retaining members are formed by two partitions (12) spaced apart parallel to each other, arranged along generatrices of the cylindrical filter surface.

5. An installation according to claim 1, **characterized in that** the filter surface is conical.

6. A device according to one of claims 1 to 5, **characterized in that** the filter member is movable whereas said at least one suction device is fixed.

7. An installation according to one of claims 1 to 5, **characterized in that** the filter member is fixed whereas said at least one suction device is movable.

8. An installation according to one of claims 1 to 5, **characterized in that** the filter member and said at least one suction device are movable.

9. An installation according to one of claims 6 to 8, **characterized in that** the drive means (17, 18, 19) are adapted to rotationally drive the filter member, said at least one suction device, or both.

10. An installation according to one of claims 1 to 9, **characterized in that** the suction device or each suction device if there are several of them, comprises a suction unit (40) and a suction nozzle (30), it being possible for one suction unit to be common to several nozzles.

11. An installation according to claims 2 and 10, **characterized in that** the suction nozzle (30) is of elongate general shape and comprises an envelope-forming wall which, in cross-section, has an open profile provided with an opening (31) face to face with the retaining members.

12. An installation according to claim 11, **characterized in that** the general shape of the open profile is that of a U or a C.

13. An installation according to claim 11 or 12, **characterized in that**, in plan view, the opening (31) has a substantially rectangular outline of dimensions equal to or greater than those of the facing retaining members.
